Europäisches Patentamt

European Patent Office

Office européen des brevets

(11) Veröffentlichungsnummer: **0 469 535 A2**

# EUROPÄISCHE PATENTANMELDUNG

(21) Anmeldenummer: **91112764.5**

(22) Anmeldetag: **30.07.91**

(51) Int. Cl.⁵: **G01K 5/46**

(30) Priorität: **31.07.90 DE 9011257 U**

(43) Veröffentlichungstag der Anmeldung:
**05.02.92 Patentblatt 92/06**

(84) Benannte Vertragsstaaten:
**CH DE FR GB LI NL**

(71) Anmelder: **ALEXANDER WIEGAND GmbH & Co.**

**W-8763 Klingenbach(DE)**

(72) Erfinder: **Grimm, Hans**
**Mittlere Hochstrasse 12**
**W-6349 Sinn(DE)**

(74) Vertreter: **Grams, Klaus Dieter, Dipl.-Ing. et al**
**Patentanwaltsbüro Tiedtke-Bühling-Kinne-**
**Grupe-Pellmann-Grams-Struif-Roth**
**Bavariaring 4**
**W-8000 München 2(DE)**

(54) Gasthermometer.

(57) Gasthermometer mit einem hohlen Meßfühler, einem Meßwandler, der eine Gaskammer sowie eine die Gaskammer begrenzende, flache Membran und einen metallischen Membranträger aufweist, und einem Kapillarrohr, das den Meßfühler mit der Gaskammer verbindet. Der metallische Membranträger (28) und die Membran (26) bilden ein einstückig geformtes Meßelement (24), wobei der Membranträger (28) aus einem Rohrabschnitt (30) und einem kreisringförmigen Flansch (32) besteht und wobei die Membran (26) und der Flansch (32) an entgegengesetzten Enden des Rohrabschnitts (30) angeordnet sind, so daß das Meßelement (24) topfförmig ist. Die Gaskammer (12) ist innerhalb des Meßelementes (24) auf der Vorderseite der Membran (26) angeordnet, auf deren Rückseite eine Dünnfilmanordnung (38) fest angebracht ist, die zu einer Meßbrücke geschaltete Dehnungsmeßstreifen sowie zugehörige metallische Kontaktflächen aufweist. Die durch die Auslenkung der Membran (26) verursachte elektrische Widerstandsänderung der Dehnungsmeßstreifen dient als die Temperatur am Meßfühler widergebendes Meßsignal.

Fig. 2

EP 0 469 535 A2

Die Erfindung bezieht sich auf ein Gasthermometer gemäß dem Oberbegriff von Schutzanspruch 1.

Ein solches Gasthermometer ist bekannt (DE-AS 24 44 777). Bei einem solchen Gasthermometer ist der Meßfühler nur mit einem Gas oder mit einem Gas und einem Stoff gefüllt, dessen Absorptionsverhalten oder Dampfdruckverhalten sich in Abhängigkeit von der Temperatur ändert, so daß innerhalb des Meßfühlers eine zu einer Temperaturänderung im wesentlichen proportionale, isochore Gasdruckänderung erfolgt. Der Gasdruck wird auf den Meßwandler gegeben, mit dessen Hilfe eine Druckmessung erfolgt, wobei der gemessene Druck eine Aussage über die am Meßfühler herrschende Temperatur ermöglicht Ein solches Gasthermometer hat den Vorteil, daß sich lediglich der Meßfühler am Ort der zu messenden Temperatur zu befinden braucht und daß der Meßfühler ein einfaches, unempfindliches Element ist, das gegebenenfalls auch hohen Temperaturen standhält.

Bei dem bekannten Gasthermometer ist auf der Rückseite der Membran ein elektrischer Schalter angeordnet, der von der Membran bei deren Auslenkung betätigt wird, was zur Folge hat, daß auf der Rückseite ein Gegendruck herbeigeführt wird, der gleich dem Druck in der Gaskammer ist. Dieser Gegendruck stellt dann das Meßsignal dar und wird mittels eines herkömmlichen Druckmeßgerätes gemessen, dessen Skala in einer Temperatureinheit beschriftet ist.

Bei diesem bekannten Gasthermometer und grundsätzlich bei Gasthermometern liegt der Nachteil vor, daß das Gasvolumen innerhalb des Kapillarrohres und innerhalb der Gaskammer ein Totvolumen darstellt, das, je größer der Anteil dieses Totvolumens am Gesamtvolumen innerhalb des Meßfühlers, des Kapillarrohres und der Gaskammer ist, die Meßgenauigkeit umso mehr vermindert. Ferner führt die Auslenkung der Membran zu einer Änderung des Gesamtvolumens und somit zu einem Linearitätsfehler der Messung bzw. Temperaturanzeige, da das Meßprinzip auf der Annahme konstanten Gasgesamtvolumens basiert. Bei dem bekannten Gasthermometer ist zwar einer Veränderung des Gasgesamtvolumens dadurch vorgebeugt, daß die Auslenkung der Membran durch den Gegendruck auf deren Rückseite kompensiert wird; der konstruktive Aufwand hierfür ist jedoch hoch. Ferner ist die Meßgenauigkeit wegen eines verhältnismäßig großen Totvolumens noch verbesserungswürdig.

Der Erfindung liegt die Aufgabe zugrunde, das gattungsgemäße Gasthermometer dahingehend weiterzubilden, daß auf einfache Weise für hohe Meßgenauigkeit und geringen Linearitätsfehler gesorgt ist.

Diese Aufgabe wird erfindungsgemäß durch das Gasthermometer gemäß Schutzanspruch 1 gelöst, d.h. im wesentlichen dadurch, daß die Membran mit ihrem Membranträger zu einem einstückigen topfförmigen Meßelement vereinigt ist, auf dessen Unterseite, die durch die Rückseite der Membran gebildet ist, eine Dehnungsmeßstreifen-Meßbrücke in Dünnfilmtechnik ausgebildet ist. Die Dünnfilm-Dehnungsmeßstreifenanordnung hat den Vorteil, daß sie mit sehr kleiner Flächenausdehnung ausgebildet werden kann, daß sie der zu erfassenden Auslenkung der Membran praktisch keinen Widerstand entgegensetzt, daß sie eine streng lineare Widerstands-Dehnungscharakteristik aufweist, daß sie hysteresefrei ist und daß praktisch keine Kriechfehler auftreten. Im Falle der Erfindung wird dabei insbesondere ausgenutzt, daß die benötigte Fläche sehr klein ist, so daß die Membran nur einen kleinen Durchmesser zu haben braucht und demzufolge die Gaskammer ein nur sehr geringes Volumen hat. Dadurch ist das Totvolumen klein und demzufolge die Meßgenauigkeit groß. Obwohl bei der Erfindung die Auslenkung der Membran nicht kompensiert wird, ist dennoch der Linearitätsfehler sehr gering, weil die Volumenänderung, die bei einer Auslenkung der Membran auftritt, wegen des geringen Durchmessers der Membran absolut und relativ zum Gasgesamtvolumen sehr niedrig ist. Weil die Auslenkung der Membran zugelassen und nicht kompensiert wird, sind die bei dem gattungsbildenden Gasthermometer zur Kompensation vorgesehenen Maßnahmen entbehrlich, so daß der geringe Linearitätsfehler auf vereinfachte Weise erzielt ist.

Die vorstehend dargelegten Vorteile hinsichtlich der einfachen konstruktiven Ausbildung und des geringen Gaskammervolumens mit den daraus resultierenden Vorteilen hoher Meßgenauigkeit und geringen Linearitätsfehlers basieren auf der angewandten Dünnfilm-Dehnungsmeßstreifenanordnung. Die Herstellung einer Dünnfilm-Dehnungsmeßstreifenanordnung erfordert jedoch mehrfache Polier- und Schleifvorgänge an der Grundfläche, auf der die Dünnfilm-Dehnungsmeßstreifenanordnung aufgebaut werden soll, sowie an den Schichten derselben und erfordert darüber hinaus, daß der Träger der Dünnfilm-Dehnungsmeßstreifenanordnung in eine Vorrichtung zum Aufdampfen oder Aufsputtern eingebracht werden kann. Somit stellt die Ausbildung von Dünnfilm-Dehnungsmeßstreifenanordnungen trotz ihrer Vorteile bestimmte Anforderungen an den Träger der Dünnfilm-Dehnungsmeßstreifenanordnung. Diese werden von dem topfförmigen Meßelement, das bei dem neuerungsgemäßen Gasthermometer vorgesehen ist, in hervorragender Weise erfüllt. Das Meßelement liefert in Form der ebenen Rückseite der Membran, die zugleich die Unterseite des Meßelementes ist, eine vorstehende Grundfläche mit kleinem Durchmesser, die sich gut zum Aufdampfen bzw. Aufsputtern sowie zum Polieren und Schleifen eignet, und schützt zugleich durch seinen ringförmigen Flansch sowie seinen Rohrabschnitt die Membran und dadurch wiederum die Dünnfilm-Dehnungsmeßstreifenanordnung vor thermischen und mechanischen Belastungen.

Bei einem zum Messen von Drücken dienenden Druckaufnehmer ist es bekannt (DE-GM-74 42 919), eine Membran einstückig mit einem Rohrabschnitt und einem Flansch auszubilden und auf der Rückseite der Membran eine Meßbrücke aus Dehnungsmeßstreifen anzuordnen. Es ist jedoch keine Dünnfilm-Dehnungsmeßstreifenanordnung vorgesehen. Vielmehr bestehen die Dehnungsmeßstreifen aus einer Trägerfolie, die auf die Rückseite der Membran auf spezielle Weise geklebt worden ist. Das Aufkleben der Dehnungsmeßstreifen kann zu verhältnismäßig großen Meßfehlern führen, da es nicht immer hinreichend gleichmäßigen Kraftfluß zwischen der Rückseite der Membran und dem jeweiligen Dehnungsmeßstreifen gewährleistet. Ferner besteht die Gefahr des Kriechens der Dehnungsmeßstreifenanordnung, was die Meßergebnisse verändert. Insbesondere aber lassen die aufgeklebten Dehnungsmeßstreifen nicht die bei der Erfindung erreichte Miniaturisierung zu.

In vorteilhafter Ausbildung der Neuerung kann vorgesehen sein, daß der Meßwandler eine Halteplatte für das Meßelement aufweist, in der eine gestufte Bohrung ausgebildet ist, in die der Flansch auf der Stufe aufsitzend eingepaßt ist, wobei der Flansch und die Halteplatte in der Passungsfuge miteinander verschweißt sind. Dabei wirkt sich die Topfform des Meßelementes besonders vorteilhaft aus, da die beim Schweißen auftretenden Wärmebelastungen und temperaturbedingten mechanischen Spannungen weitgehend vom ringförmigen Flansch und vom Rohrabschnitt absorbiert werden, so daß die von der Membran getragene Dünnfilm-Dehnungsmeßstreifenanordnung vor zu hoher Wärmebelastung, die die Dünnfilm-Dehnungsmeßstreifenanordnung beschädigen könnte, geschützt ist.

Ferner kann in vorteilhafter Ausbildung der Erfindung vorgesehen sein, daß das Kapillarrohr mit dem Meßelement mittels eines in das Meßelement eingepaßten Rohrstücks dicht verbunden ist, das derart innerhalb des Meßelementes angeordnet ist, daß es sich über den größeren Teil der axialen Höhe des Meßelementes erstreckt, so daß als Gaskammer nur ein flacher, scheibenförmiger Raum oberhalb der Membran freibleibt. Diese Ausbildung ergibt ein besonders niedriges Gaskammervolumen und demzufolge ein besonders niedriges Totvolumen.

Ausführungsbeispiele der Erfindung sind in den Zeichnungen dargestellt und werden im folgenden näher erläutert. Es zeigen:

Fig. 1 eine schematische Darstellung eines Gasthermometers;

Fig. 2 eine ausschnittsweise schematische Darstellung, teilweise im Schnitt, von Elementen eines Meßwandlers des Gasthermometers gemäß Fig. 1;

Fig. 3 eine Draufsicht auf eine Brückenschaltung eines Meßelementes des Meßwandlers gemäß Fig. 2;

Fig. 4 das Schaltungsschema der Brückenschaltung gemäß Fig. 3; und

Fig. 5 eine ausschnittsweise Darstellung des Schichtaufbaus einer Dünnfilm-Dehnungsmeßstreifenanordnung.

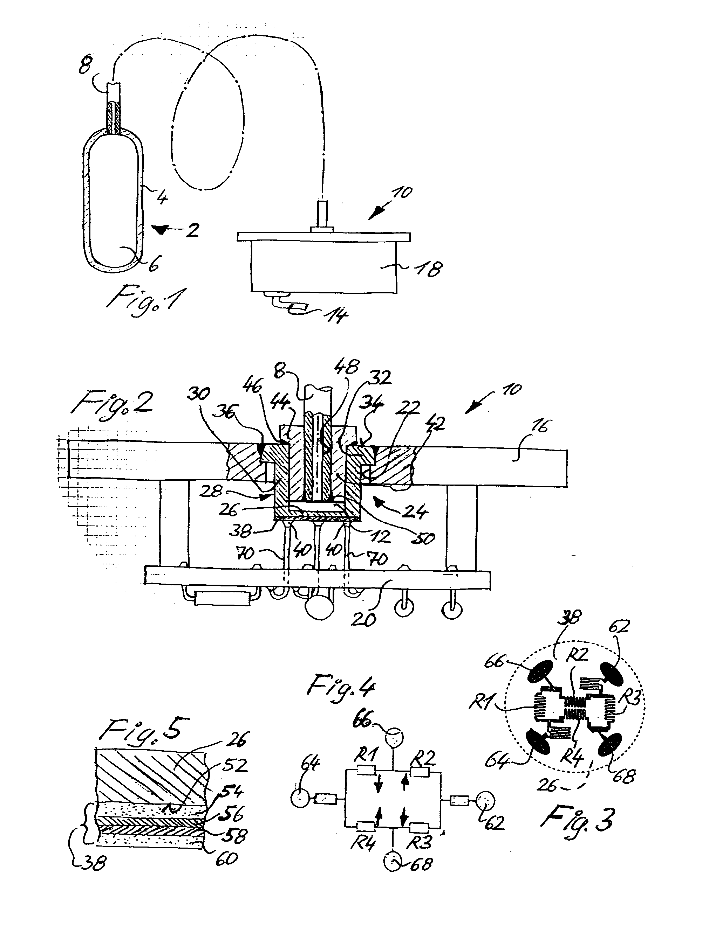

Fig. 1 zeigt schematisch ein Gasthermometer. Dieses umfaßt einen Meßfühler 2, der ein im wesentlichen zylindrisches, metallisches Gehäuse 4 aufweist, in dessen Innerem eine Gasfüllung 6 eingeschlossen ist. Der Meßfühler 2 wird der zu messenden Temperatur ausgesetzt, was zur Folge hat, daß sich der Druck der Gasfüllung 6 entsprechend der Temperatur einstellt.

Fest verbunden mit dem Meßfühler 2 ist ein Kapillarrohr 8, das zu einem Meßwandler 10 führt und mit diesem fest verbunden ist. Durch das Kapillarrohr 8 hindurch steht das Innere des Gehäuses 4 in Strömungs- und somit Druckverbindung mit einer noch ausführlicher zu erläuternden Gaskammer 12 innerhalb des Meßwandlers 10. Der Meßwandler 10 liefert über ein Anschlußkabel 14 ein elektrisches Meßsignal, das auf hier nicht näher gezeigte und erläuterte Weise weiterverarbeitet wird, beispielsweise mittels einer Anzeige sichtbar gemacht wird, und der gemessenen Temperatur entspricht.

Fig. 2 zeigt in vergrößertem Maßstab ausschnittsweise den Meßwandler 10. Der Meßwandler 10 umfaßt eine Halteplatte 16, an der ein in Fig. 2 nicht gezeigtes Gehäuse 18 des Meßwandlers sowie eine gedruckte Leiterplatte 20 befestigt sind, die elektronische Bauelemente einer Speise- und Auswerteschaltung trägt. Auf die Ausbildung dieser Speise- und Auswerteschaltung kommt es für die Erfindung nicht an, weswegen diese Schaltung im folgenden nicht weiter erläutert wird. Von der Speise- und Auswerteschaltung geht auf nicht dargestellte Weise das Anschlußkabel 14 aus.

In der Halteplatte ist eine gestufte Bohrung 22 ausgebildet, in die ein Meßelement 24 eingesetzt ist. Das Meßelement 24 umfaßt eine flache, kreisförmige Membran 26 aus einem metallischen Werkstoff, beispielsweise austhenitischem Stahl, die einstückig ausgebildet ist mit einem Membranträger 28, der aus einem kreisringförmigen, zylindrischen Rohrabschnitt 30 und einem kreisringförmigen Flansch 32 besteht. An seinem ersten, in Fig. 2 unteren Ende geht der Rohrabschnitt 30 in die Membran 26 über, wobei sich der Rohrabschnitt 30 von der Membran 26 aus lediglich nach oben in Fig. 2 erstreckt, so daß das gesamte Meßelement 24 auf seiner Unterseite, die zugleich die Rückseite der Membran 26 ist, eben ist. An seinem in Fig. 2 oberen, zweiten Ende geht der Rohrabschnitt 30 in den Flansch 32 über, der radial über die Außenfläche des Rohrabschnitts vorsteht und außen durch eine kreiszylindrische Mantelfläche mit zueinander parallelen Mantellinien begrenzt ist. Der Flansch 32 weist eine ringförmige, ebene Stirnfläche 34 auf, die am fertig montierten Meßwandler 10 bündig in die Vorderseite der Halteplatte 16 übergeht. Die von der Stirnfläche 34 abgewandte Unterseite des Flansches 32 ist als ebene Ringfläche ausgebildet, mit der das Meßelement 24 auf der Stufe der Bohrung 22 aufsitzt.

Wie Fig. 2 erkennen läßt, sind die radiale Dicke bzw. Wandstärke des Rohrabschnitts 30, die radiale Dicke des Flansches 32 und die axiale Höhe des Flansches 32 sowie die axiale Höhe des Rohrschnitts 30, gemessen senkrecht zur Ebene der Membran 26, wesentlich größer als die Dicke der Membran 26, so daß das Volumen des Flansches 32 und auch des Rohrabschnitts 30 wesentlich größer ist als das Volumen der Membran 26. Bevorzugte Abmessungen des vorstehend beschrie - benen Meßelementes sind eine Dicke der Membran 26 von 0,21 mm, ein Innendurchmesser des Flansches 32 und des Rohrabschnitts 30 von 4,0 mm, eine Wandstärke bzw. radiale Dicke des Rohrabschnitts 30 von 1,5 mm, eine radiale Dicke des Flansch 32 von 2,5 mm, eine axiale Höhe des Flansches 32 von 3,0 mm und eine axiale Höhe des gesamten Meßelementes 24 von 10,0 mm.

Der Flansch 32 ist mit seiner äußeren Mantelfläche eingepaßt in den weiteren Abschnitt der Bohrung 22 und sitzt auf deren Stufe auf. Zwischen dem engeren Abschnitt der Bohrung 22 und der Außenfläche des Rohrabschnitts 30 besteht ein ringförmiger Zwischenraum. In der Passungsfuge zwischen dem Flansch 32 und dem erweiterten Abschnitt der Bohrung 22 sind das Meßelement 24 und die Halteplatte 16 miteinander verschweißt, wie dies durch eine Schweißnaht 36 gezeigt ist, die beispielsweise durch Laserschweißen erzeugt worden sein kann. Der Membranträger 28 stellt ein Element mit verhältnismäßig großer Querschnittsfläche und verhältnismäßig großem Volumen dar, so daß er einerseits relativ steif ist und andererseits eine wesentlich größere Wärmekapazität als die Membran 26 hat. Dies führt dazu, daß die beim Verschweißen des Meßelementes 24 mit der Halteplatte 16 auftretenden Wärmebelastungen und temperaturbedingten mechanischen Spannungen weitgehend vom verdickten Flansch 32 und vom Rohrabschnitt 30 absorbiert werden, so daß die Membran 26 und insbesondere eine von ihr getragene, noch zu erläuternde Dehnungsmeßstreifenanordnung 38 - im folgenden DMS-Anordnung genannt - sowie deren Lötstellen 40 vor zu hoher Wärmebelastung geschützt sind und außerdem temperaturbedingte mechanische Spannungen von der Membran 26 ferngehalten sind.

Innerhalb des Meßelementes 24 ist die bereits erwähnte Gaskammer 12 ausgebildet. Sie wird begrenzt von der Ober- bzw. Vorderseite der Membran 26, der Innenfläche des Rohrabschnitts 30 und der Stirnfläche eines Rohrstücks 42, das in das Meßelement 24 fest eingesetzt ist. Das Rohrstücke 42 hat zylindrische Form und weist an seinem einen, in Fig. 2 oberen Ende einen Ringflansch 44 auf, der auf der Stirnfläche 34 des Flansches 32 aufliegt und mit diesem durch eine Schweißung verbunden ist, wie dies durch eine Schweißnaht 46 gezeigt ist. Der Außendurchmesser des zylindrischen Rohrstücks 42 stimmt mit dem Innendurchmesser des zylindrischen Wandabschnitts 30 überein. In die Bohrung 48 des Rohrstücks 42 ist das Kapillarrohr 8 passend eingesetzt, wobei das Kapillarrohr 8 und das Rohrstück 42 an dessen in Fig. 2 untenliegender Stirnfläche miteinander verschweißt sind, wie dies eine Schweißnaht 50 zeigt. Auf vorstehend beschriebene Weise steht somit die Gaskammer 12 in Verbindung mit dem Inneren des Kapillarrohres 8 und dadurch wiederum mit der Gasfüllung 6. Nach außen jedoch ist die Gaskammer 12 dicht abgeschlossen, und zwar durch die Schweißnähte 46 und 50.

Das Rohrstück 42 erstreckt sich mit seiner unteren Stirnfläche nahezu bis zur Vorderseite der Membran 26, so daß der dort freibleibende Raum eine nur geringe Höhe hat und demzufolge die Gaskammer 12 scheibenförmig und sehr flach ist. Das Rohrstück 42 dient somit nicht nur dazu, das Kapillarrohr 8 am Meßelement 24 zu befestigen, sondern auch dazu, für eine sehr flache Gaskammer 12 zu sorgen, deren axiale Höhe, gemessen senkrecht zur Ebene der Membran 26, wesentlich geringer ist als die axiale Höhe des topfförmigen Meßelementes 24.

Auf der Unterseite bzw. Rückseite der Membran 26 ist die flache DMS-Anordnung 38 fest angebracht. Die DMS-Anordnung 38 ist in Dünnfilmtechnik hergestellt. Ihr Schichtaufbau ist schematisch in Fig. 5 gezeigt. An der ebenen Rückseite 52 der Membran 26 haftet eine isolierende $SiO_2$-Schicht 54. An dieser haftet eine Widerstandsschicht 56, in der vier elektrische Widerstände ausgebildet sind, die beispielsweise aus NiCr bestehen. An der Widerstandsschicht 56 haftet eine Leiterschicht 58, in der die elektrischen Leiter und Kontaktflächen der DMS-Anordnung ausgebildet sind und die beispielsweise aus Ni besteht. An der Leiterschicht 58 wiederum haftet eine Schutzschicht 60, die wiederum beispielsweise aus $SiO_2$ besteht. Die Herstellung einer derartigen Dünnfilm-DMS-Anordnung ist an sich bekannt und wird daher hier nicht näher erläutert.

Fig. 3 zeigt in Draufsicht die in der Widerstandsschicht 56 ausgebildeten elektrischen Widerstände sowie die in der Leiterschicht 58 ausgebildeten Leiter und Kontaktflächen. Es ist erkennbar, daß die in Fig. 3 gezeigte Schaltungskonfiguration zur geometrischen Mitte der Membran 26 symmetrisch ist. Das zugeordnete Schaltungsschema ist in Fig. 4 gezeigt. Die DMS-Anordnung 38 umfaßt vier jeweils einen Dehnungsmeßstreifen bildende Widerstände R1, R2, R3 und R4. Diese sind in der in Fig. 4 erkennbaren Weise zu einer Wheatstonschen Vollbrücke geschaltet, der über zwei Kontaktflächen 62 und 64 die Speisespannung zugeführt wird, während über zwei Kontaktflächen 66 und 68 die Signalspannung abgenommen wird. Wenn die Widerstände in der in Fig. 3 gezeigten Weise auf der Membran 26 angeordnet sind, führt eine Verformung der Membran 26 durch auf die Membran von oben in Fig. 2 aufgebrachten Druck zu einer Erhöhung des elektrischen Widerstandes der Widerstände R2 und R4, wie dies in Fig. 4 durch Pfeile neben diesen Widerständen angedeutet ist, und zu einer Verringerung des elektrischen Widerstandes der Widerstände R1 und R3, wie dies ebenfalls durch Pfeile in Fig. 4 angedeutet ist. Demzufolge addieren sich die Signale der vier Dehnungsmeßstreifen bzw. Widerstände zur Signalspannung. Die Höhe der Signalspannung ist ein Maß für den Druck, mit dem die Vorderseite der Membran 26 beaufschlagt ist, und somit wiederum für die Temperatur, der der Meßfühler 2 ausgesetzt ist. Mit Hilfe von Anschlußdrähten 70, die mittels der Lötstellen 40 in elektrisch leitender Verbindung mit den Kontaktflächen 62, 64, 66 und 68 stehen, ist eine Verbindung zu der Speise- und Auswerteschaltung auf der Leiterplatte 20 hergestellt. Die Auswertung der Signalspannung mittels dieser Schaltung wird hier jedoch nicht weiter erläutert.

Das beschriebene Gasthermometer zeichnet sich aus durch eine Gaskammer mit sehr kleinem Volumen und somit durch geringes Totvolumen und hohe Anzeigegenauigkeit. Zugleich ist der Linearitätsfehler gering. Bewirkt ist dieser Effekt durch die Anwendung einer Dünnfilm-Dehnungsmeßstreifenanordnung auf einer dem Druck in der Gaskammer ausgesetzten Membran im Zusammenwirken mit der beschriebenen geometrischkonstruktiven Ausbildung des Meßelementes 24 und - bei der bevorzugten Ausführungsform - des Rohrstücks 42.

Gasthermometer mit einem hohlen Meßfühler, einem Meßwandler, der eine Gaskammer sowie eine die Gaskammer begrenzende, flache Membran und einen metallischen Membranträger aufweist, und einem Kapillarrohr, das den Meßfühler mit der Gaskammer verbindet. Der metallische Membranträger (28) und die Membran (26) bilden ein einstückig geformtes Meßelement (24), wobei der Membranträger (28) aus einem Rohrabschnitt (30) und einem kreisringförmigen Flansch (32) besteht und wobei die Membran (26) und der Flansch (32) an entgegengesetzten Enden des Rohrabschnitts (30) angeordnet sind, so daß das Meßelement (24) topfförmig ist. Die Gaskammer (12) ist innerhalb des Meßelementes (24) auf der Vorderseite der Membran (26) angeordnet, auf deren Rückseite eine Dünnfilmanordnung (38) fest angebracht ist, die zu einer Meßbrücke geschaltete Dehnungsmeßstreifen sowie zugehörige metallische Kontaktflächen aufweist. Die durch die Auslenkung der Membran (26) verursachte elektrische Widerstandsänderung der Dehnungsmeßstreifen dient als die Temperatur am Meßfühler widergebendes Meßsignal.

## Patentansprüche

1. Gasthermometer mit einem hohlen Meßfühler, der eine Gasfüllung enthält, deren Druck sich in Abhängigkeit von der Temperatur ändert, einem Meßwandler, der eine Gaskammer sowie eine die Gaskammer begrenzende, flache Membran und einen metallischen Membranträger aufweist, der die Membran an ihrem Rand trägt, und einem Kapillarrohr, das das Innere des Meßfühlers mit der Gaskammer verbindet, wobei die durch den Druck in der Gaskammer verursachte Auslenkung der Membran erfaßt und in ein Meßsignal umgewandelt wird, **dadurch gekennzeichnet**, daß der metallische Membranträger (28) und die Membran (26) gemeinsam ein einstückig geformtes Meßelement (24) bilden, daß der Membranträger (28) aus einem kreisringförmigen Rohrabschnitt (30) und einem kreisringförmigen Flansch (32) besteht, wobei die Membran (26) an einem ersten Ende des Rohrabschnitts (30) und der Flansch (32) am anderen, zweiten Ende des Rohrabschnitts (30) jeweils konzentrisch zu letzterem angeordnet sind, daß sich der Rohrabschnitt (30) auf nur einer Seite der Membran (26) erstreckt, so daß das Meßelement (24) topfförmig und auf der Rückseite (52) der Membran (26), die vom Flansch (32) abgewandt ist, eben ist, wobei die Gaskammer (12) innerhalb des Meßelementes (24) auf der Vorderseite der Membran (26) angeordnet ist, und daß auf der Rückseite (52) der Membran (26) eine Dünnfilmanordnung (38) fest angebracht ist, die zu einer Meßbrücke geschaltete Dehnungsmeßstreifen sowie zugehörige metallische Kontaktflächen (62, 64, 66, 68) aufweist, wobei die durch den Druck in der Gaskammer (12) bewirkte Auslenkung der Membran (26) auf die Dehnungsmeßstreifen übertragen wird und deren dadurch verursachte elektrische Widerstandsänderung als die Temperatur am Meßfühler wiedergebendes Meßsignal dient.

2. Gasthermometer nach Anspruch 1, dadurch gekennzeichnet, daß die Meßbrücke eine Wheatstonsche Vollbrücke aus vier Dehnungsmeßstreifen ist.

3. Gasthermometer nach Anspruch 1 oder 2, dadurch gekennzeichnet, daß die Schaltungskonfiguration bezüglich der geometrischen Mitte der Membran (26) symmetrisch ist.

4. Gasthermometer nach einem der Ansprüche 1 bis 3, dadurch gekennzeichnet, daß der kreisringförmige Flansch (32) radial über die Außenfläche des Rohrabschnitts (30) vorsteht und außen durch eine Mantelfläche mit zueinander parallelen Mantellinien begrenzt ist, die senkrecht zur Membranebene verlaufen.

5. Gasthermometer nach einem der Ansprüche 1 bis 4, dadurch gekennzeichnet, daß die Wandstärke des Rohrabschnitts (30), die radiale Dicke des Flansches (32) und die axialen Höhen des Flansches (32) und des Rohrabschnitts (30) wesentlich größer sind als die Dicke der Membran (26).

6. Gasthermometer nach Anspruch 5, dadurch gekennzeichnet, daß die Dicke der Membran (26) 0,16 bis 0,26 mm, vorzugsweise 0,21 mm, beträgt, daß der Innendurchmesser des Rohrabschnitts (30) und des Flansches (32) 3,0 bis 6,0 mm beträgt, daß die radiale Dicke des Rohrabschnitts (30) 1,0 bis 2,5 mm und die radiale Dicke des Flansches (32) 2,0 bis 4,0 mm betragen und daß die axiale Höhe des Flansches (32) 1,0 bis 4,0 mm und die axiale Höhe des Meßelementes (24) 5,0 bis 9,0 mm betragen.

7. Gasthermometer nach einem der Ansprüche 1 bis 6, dadurch gekennzeichnet, daß der Meßwandler (10) eine Halteplatte (16) für das Meßelement (24) aufweist, in der eine gestufte Bohrung (22) ausgebildet ist, in die der Flansch (32) auf der Stufe aufsitzend eingepaßt ist, wobei der Flansch (32) und die Halteplatte (16) in der Passungsfuge miteinander verschweißt sind.

8. Gasthermometer nach einem der Ansprüche 1 bis 7, gekennzeichnet durch ein kreiszylindrisches Rohrstück (42), in dessen Bohrung das Kapillarrohr (8) dicht befestigt ist und das in den Rohrabschnitt (30) des Meßelementes (24) dicht derart eingesetzt ist, daß es sich über den größeren Teil der axialen Höhe des Meßelementes (24) erstreckt und daß die Gaskammer (12) zwischen der Vorderseite der Membran (26) und der der Membran (26) zugewandten Stirnfläche des Rohrstücks (42) einen nur flachen, scheibenförmigen Raum einnimmt.

9. Gasthermometer nach Anspruch 8, dadurch gekennzeichnet, daß das Rohrstück (42) mit dem Meßelement (24) verschweißt ist.

Fig.1

Fig.2

Fig.5

Fig.4

Fig.3